# DEMANDE DE BREVET EUROPEEN

(11) **EP 4 183 505 A1**
(43) Date de publication de la demande: **24.05.2023**
(21) Numéro de dépôt: 22203458.9
(22) Date de dépôt: 25.10.2022
(51) Int. Cl.: B23B 31/40

(54) **PINCE DE SERRAGE POUR MACHINES-OUTILS**

(30) Priorité: 23.11.2021 CH 0705882021
(71) Demandeur: SER-TECK Bendit SA, 2855 Glovelier (CH)
(72) Inventeur: BENDIT, Jean-Luc, 2854 Bassecourt (CH)
(74) Mandataire: P&TS SA (AG, Ltd.)

(57) **Abrégé**

L'invention concerne une pince de serrage (10) pour pièce d'usinage adaptée pour coopérer avec une douille coulissante d'une machine-outil. La pince de serrage (10) comporte un corps de pince (12) et une tête de serrage amovible (50) montée sur le corps de pince (12) et comportant une partie distale (52) destinée à tenir une pièce au cours de l'usinage. Le corps de pince (12) comporte un corps de guidage (14) définissant un axe longitudinal. Un poussoir (40) est monté coulissant à l'intérieur du corps de guidage (14) le long de l'axe longitudinal afin de passer d'une première position axiale dans laquelle la partie distale (52) de la tête de serrage (50) définit un premier diamètre extérieur autour duquel peut être montée une pièce à usiner, à une seconde position axiale sous l'action de la douille coulissante et dans laquelle la partie distale (52) de la tête de serrage (50) définit un second diamètre extérieur supérieur au premier diamètre afin de serrer la pièce à usiner. Le corps de pince (12) comporte une partie distale (18) comprenant un logement (28). La tête de serrage amovible (50) comporte une partie proximale (62) montée dans le logement (28). La pince de serrage (10) est caractérisée en ce que la partie distale (18) du corps de pince (12) est rigide.

## Description

### Domaine technique

La présente invention concerne une pince de serrage pour machines-outils.

### Etat de la technique

Lors de l'usinage de pièces sur des tours, il est connu d'utiliser des pinces de serrage pour la fixation de la pièce à usiner par un serrage par l'extérieur. Les pinces de serrage habituelles sont réalisées en une seule pièce. Dans un atelier fabriquant différentes pièces, il est souvent nécessaire de prévoir un nombre important de pinces de serrage afin de saisir des pièces de taille ou de formes différentes.

Afin de remédier à ce problème, il est connu de séparer la pince de serrage en un corps de pince et une tête de pince amovible. Par exemple le document FR239790 divulgue une pince pour effectuer un serrage par l'extérieur et dont la tête de serrage et le tube de serrage sont susceptibles d'être séparés l'un de l'autre.

Un serrage par l'extérieur ne convient toutefois pas pour l'usinage de certaines pièces complexes, notamment lorsqu'il est nécessaire d'usiner une pièce sur toute sa longueur, sans possibilité de saisir la pièce par ses deux extrémités. Afin de remédier à ce problème, il existe des pinces de serrage permettant de saisir une pièce par l'intérieur de celle-ci, c'est-à-dire en insérant l'extrémité de la pince à l'intérieur d'une cavité de la pièce à usiner.

EP2383059B1 divulgue un exemple de ce type de pinces de serrage avec un embout interchangeable. Cette pince comporte un corps de pince comprenant une première extrémité destinée à être insérée dans une broche d'une machine-outil et une deuxième extrémité libre dotée de doigts aptes à se déformer élastiquement dans une direction radiale et destinés à recevoir un embout de serrage amovible. Le corps de pince comporte un axe de poussée monté coulissant à l'intérieur du corps de pince et agencé pour être actionné par d'une douille mobile de la broche dans une position dans laquelle l'axe de poussée coopère avec la deuxième extrémité du corps de serrage afin d'écarter les doigts dans une direction radiale de manière à assurer un serrage de la pièce à usiner.

Cette pince de serrage possède plusieurs inconvénients. Le corps de pince est fendu du côté d'une extrémité selon l'axe longitudinal du corps de manière à définir les doigts alors que l'embout de serrage est également fendu afin de définir des mords associés solidairement à chaque doigt du corps de pince. L'élasticité du corps de pince et de l'embout de de préhension ne permet pas d'obtenir une force de serrage optimale de la pièce à usiner. La configuration de l'embout de préhension ne permet pas en outre sa personnalisation afin qu'elle soit adaptée à différents types de pièces à usiner.

Par ailleurs, l'axe de poussé exerce une contrainte axiale uniquement sur un côté de l'embout de serrage, ce qui ne permet pas d'assurer un accroissement du diamètre qui est constant sur toute la longueur axiale de la partie de préhension de l'embout de serrage. La force de serrage exercée par l'embout de serrage sur la pièce à usiner peut par conséquent varier de long de la partie de préhension avec un risque de désaxage de la pièce lors de l'usinage, ce risque étant particulièrement significatif lorsque la prise se fait sur une longueur importante de la pièce à usiner.

US2970843 divulgue un autre exemple de pince de serrage permettant de saisir une pièce par l'intérieur. La configuration de la tête de serrage ne permet pas notamment son interchangeabilité afin que la pince de serrage soit adaptée pour serrer des pièces à usiner de formes variées.

US2005/082770 divulgue une pince comportant un mécanisme de serrage à surface interne pour saisir et libérer une surface interne d'une pièce en cours d'usinage. Le mécanisme de serrage est configuré pour un échange réversible avec un mécanisme de serrage à surface externe destiné à saisir une surface externe de la pièce. Ce mécanisme ne permet pas non plus l'interchangeabilité de l'embout de préhension de la pince afin que celle-ci soit adaptée pour serrer des pièces à usiner de formes variées.

US2021/323142 divulgue une tête de préhension interchangeable comprenant un corps définissant un axe longitudinal, comportant une extrémité libre munie de secteurs aptes à se déformer élastiquement dans une direction radiale et destinée à recevoir une tête amovible. La partie déformable de l'extrémité libre ne permet pas d'assurer un serrage satisfaisant de la tête de serrage.

### Bref résumé de l'invention

Un but de la présente invention est par conséquent de proposer une pince de serrage exempte des limitations des pinces de serrage connues.

Plus particulièrement, un but de la présente invention est de proposer une pince de serrage permettant d'exercer une force de maintien plus importante sur la pièce à usiner.

Un autre but de la présente invention est de proposer une pince de serrage permettant d'exercer une force constante sur toute la longueur de la partie de préhension de la tête de serrage.

Un autre but de la présente invention est de proposer une pince de serrage permettant l'interchangeabilité de l'embout de serrage afin que la pince de serrage puisse être utilisée pour serrer des pièces à usiner de formes variées.

Un but additionnel de la présente invention est de proposer une pince de serrage adaptée pour que la forme de la tête de serrage puisse être facilement personnalisée par usinage.

Selon l'invention, ces buts sont atteints notamment au moyen d'une pince de serrage pour pièce d'usinage adaptée pour coopérer avec une douille coulissante d'une machine-outil. La pince de serrage comporte un corps de pince et une tête de serrage amovible montée sur le corps de pince et comportant une partie distale destinée à tenir une pièce au cours de l'usinage. Le corps de pince comporte un corps de guidage définissant un axe longitudinal. Un poussoir est monté coulissant à l'intérieur du corps de guidage le long de l'axe longitudinal afin de passer d'une première position axiale dans laquelle la partie distale de la tête de serrage définit un premier diamètre extérieur autour duquel peut être montée une pièce à usiner, à une seconde position axiale sous l'action de la douille coulissante et dans laquelle la partie distale de la tête de serrage définit un second diamètre extérieur supérieur au premier diamètre afin de serrer la pièce à usiner. Le corps de pince comporte une partie distale comprenant un logement. La tête de serrage amovible comporte une partie proximale montée dans le logement. La pince de serrage est caractérisée en ce que la partie distale du corps de pince est rigide.

Selon une forme de réalisation, la tête de serrage amovible est monobloc.

Selon une forme de réalisation, la partie proximale de la tête de serrage est rigide.

Selon une forme de réalisation, la partie distale de la tête de serrage comporte un insert en métal dur destiné à tenir la pièce au cours de l'usinage.

Selon une forme de réalisation, l'insert est réalisé par brasure.

Selon une forme de réalisation, le poussoir comporte ou coopère avec une aiguille s'étendant sur au moins 80% de la longueur axiale de la partie distale de la tête de serrage amovible au travers d'un passage, de préférence sur l'intégralité de ladite longueur axiale, lorsque le poussoir est dans la seconde position axiale.

Selon une forme de réalisation, l'extrémité libre de l'aiguille se trouve au niveau d'une extrémité axiale de la partie distale de la tête de serrage lorsque le poussoir est dans la première position axiale.

Selon une forme de réalisation, l'aiguille fait partie intégrante de la tête de serrage amovible.

Selon une forme de réalisation, l'aguille fait partie intégrante du corps de pince.

Selon une forme de réalisation, le poussoir comporte un taraudage axial dans lequel est vissée une vis de blocage. Une extrémité de l'aiguille est en butée contre la vis de blocage. La position axiale de cette vis de blocage peut être ajustée afin de pouvoir ajuster la position axiale de l'aiguille lorsque le poussoir se trouve dans la première ou la seconde position axiale.

Selon une forme de réalisation, la partie proximale de la tête de serrage amovible est sous la forme d'un bloc comportant plusieurs taraudages. L'axe de chaque taraudage est perpendiculaire à l'axe longitudinal du corps de guidage. Le logement de la partie distale du corps de pince est entouré d'une paroi comportant plusieurs ouvertures radiales de sorte à pouvoir fixer la tête de serrage amovible au moyen de vis de fixation traversant les ouvertures radiales et vissées dans les taraudages respectifs.

Selon une forme de réalisation, le logement de la partie distale du corps de pince est entouré d'une surface d'appui, de préférence annulaire. La tête de serrage amovible comporte une butée radiale destinée à venir en butée contre la surface d'appui lorsque le bloc de la tête de serrage amovible est monté dans logement.

Selon une forme de réalisation, le corps de pince comporte en outre un cône de poussée agencé sur l'intégralité de la circonférence du corps de guidage. Le cône de poussée est solidaire du poussoir et est agencé pour coopérer avec la douille coulissante afin d'amener le poussoir de la première à la seconde position axiale.

Selon une forme de réalisation, le poussoir coopère avec un organe élastique afin de ramener le poussoir dans la première position axiale.

### Brève description des figures

Des exemples de mise en œuvre de l'invention sont indiqués dans la description illustrée par les figures annexées dans lesquelles :
- la figure 1 illustre une vue en perspective de la pince de serrage, selon une forme de réalisation, lorsque le poussoir de la pince se trouve dans une première position axiale,
- la figure 2 illustre une vue de devant de la pince de serrage de la figure 1 ;
- la figure 3 illustre une vue de derrière de la pince de serrage de la figure 1 ;
- la figure 4 illustre une coupe axiale de la pince de serrage de la figure 1 ;
- la figure 5 illustre une vue en perspective de la pince de serrage, lorsque le poussoir de la pince se trouve dans une seconde position axiale ;
- la figure 6 illustre une coupe axiale de la pince de serrage de la figure 5, et
- la figure 7 illustre une vue en perspective de la pince de serrage, selon une forme de réalisation, lorsque la tête de serrage amovible est désolidarisée du corps de pince.

### Exemple(s) de mode de réalisation de l'invention

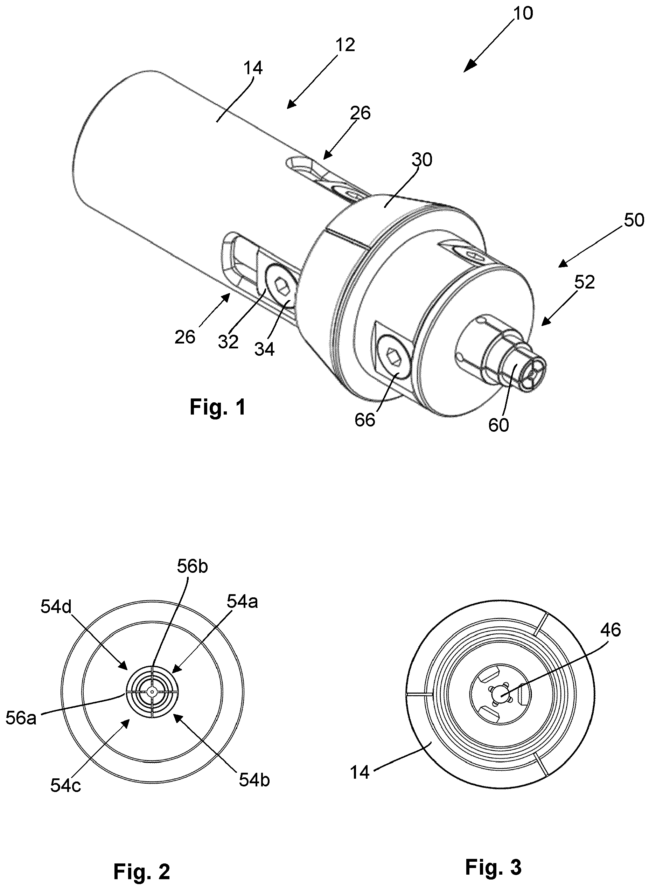

La figure 1 illustre une pince de serrage 10 à tête de serrage amovible 50, selon une forme de réalisation, destinée à être insérée dans une broche d'une machine-outil et actionnable par une douille coulissante afin d'amener la pince de serrage 10 dans une configuration de serrage permettant de maintenir une pièce à usiner avec une force importante grâce aux spécificités de la tête de serrage 50 selon la description qui en sera faite ultérieurement. L'homme du métier connait la manière dont une telle pince peut être insérée dans une machine-outil, sans qu'il soit nécessaire de la décrire en détail.

La pince de serrage 10 comporte un corps de pince 12 sur lequel la tête de serrage amovible 50 est montée. La tête de serrage 50 et le corps de pince 12 peuvent être constitués d'un matériau identique ou différent. La tête de serrage 50 peut être réalisée par exemple en laiton, en aluminium, en acier, de préférence non trempé, ou dans un matériau synthétique tel que l'Ertacetal ^{®}. Le matériau choisi doit de préférence être facilement usinable afin de permettre au client de personnaliser la partie distale 52 de la tête de serrage. Dans la présente demande, on entend par partie distale, la partie de préhension de la tête de serrage.

Dans l'exemple illustré, la tête de serrage 50 peut comporter un insert 60 agencé sur la partie distale. L'insert 60 est de préférence en métal dur afin de procurer une meilleure rigidité du serrage de la pièce à usiner ainsi qu'une meilleure résistance à l'usure. L'insert 60 peut être réalisé par exemple par brasage sur la partie distale 52. Selon une variante, la tête de serrage est dépourvue d'insert et la pièce à usiner est tenue directement par la partie distale de la tête.

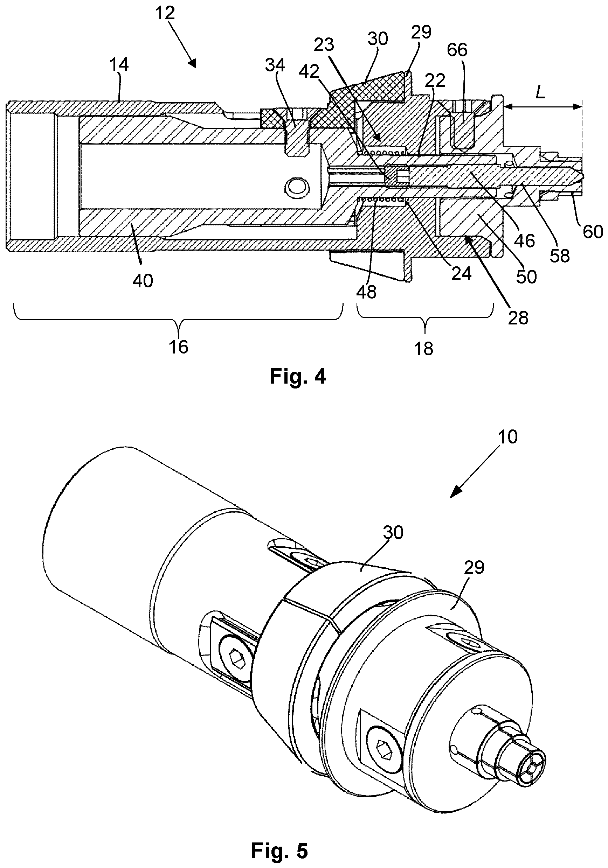

Selon la figure 2, une première et une seconde fente longitudinale 56a, 56b traversent la partie distale de la tête 50 selon une première et seconde direction. Ces deux fentes sont de préférence orientées de manière orthogonale l'une par rapport à l'autre afin de former quatre segments angulaires 54a, 54b, 54c, 54d identiques définissant entre eux un passage central 58, comme on peut le voir sur la figure 4, le long duquel une aiguille 46 est susceptible de se déplacer afin d'écarter les segments angulaires dans une direction radiale de sorte à pouvoir serrer la pièce à usiner.

A cet effet, selon la figure 4, le corps de pince 12 comporte un corps de guidage 14 à l'intérieur duquel est monté un poussoir 40 agencé pour pouvoir se déplacer le long de l'axe longitudinal du corps de guidage entre une première position axiale dans laquelle l'insert 60 défini un premier diamètre extérieur autour duquel peut être montée une pièce à usiner, et une seconde position axiale dans laquelle l'insert 60 définit un second diamètre extérieur supérieur au premier diamètre afin de serrer la pièce à usiner.

Le poussoir 40 est solidaire d'un cône de poussée 30 destiné à coopérer avec la douille coulissante de la machine-outil. Plus particulièrement, plusieurs languettes de fixations 32 font parties intégrantes du cône de poussée 30 et sont aménagées dans des ouvertures oblongues 26 réalisées sur le corps de guidage 14. Ces languettes 32 sont fixées au poussoir 40 au moyen de vis de fixation 34 engagées avec plusieurs trous taraudés radiaux, par exemple trois trous taraudés espacés de 120° les uns par rapport aux autres autour de la circonférence du corps de guidage 14.

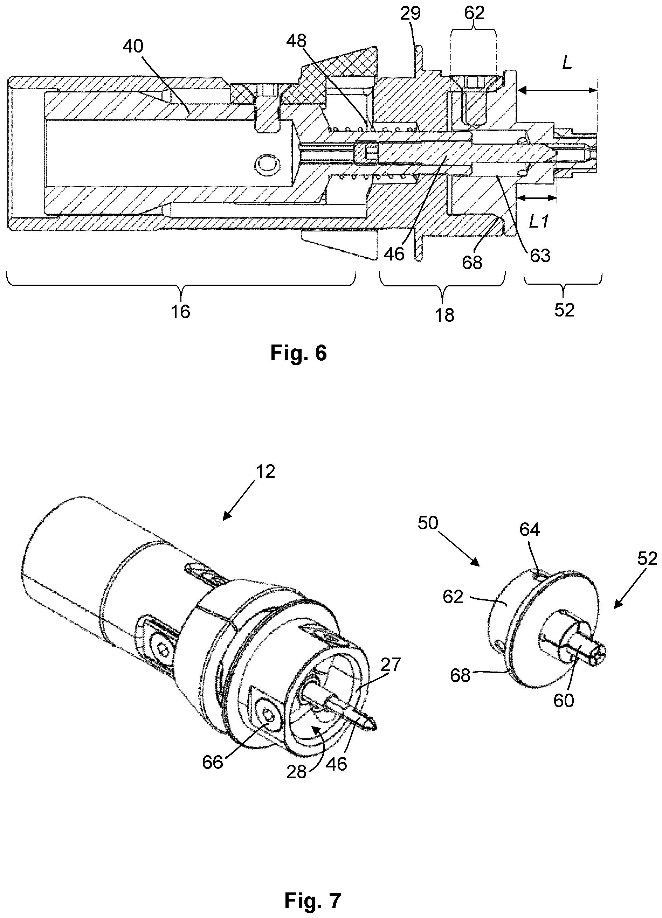

Le corps de pince 12 comporte une partie distale 18 comprenant un logement cylindrique 28. Selon la figure 7, ce logement 28 est destiné à recevoir une partie proximale 62 de la tête de serrage 50 sous forme de bloc cylindrique comportant en évidement axial 63. Ce bloc cylindrique comporte plusieurs taraudages 64. L'axe de chaque taraudage est perpendiculaire à l'axe longitudinal du corps de guidage 14. La paroi circulaire du logement 28 de la partie distale 18 du corps de pince 12 comporte plusieurs ouvertures radiales de sorte à pouvoir fixer la tête de serrage amovible 50 au moyen de vis de fixation 66 traversant les ouvertures radiales et vissées dans les taraudages respectifs.

Le logement cylindrique 28 est entouré d'une surface d'appui conique 27. La tête de serrage amovible 50 comporte une butée conique 68 (figure 6) destinée à venir en butée contre la surface d'appui 27, lorsque le bloc cylindrique 62 de la tête de serrage amovible 50 est monté dans le logement 28.

Comme illustré à la figure 4, le poussoir 40 comporte une première partie cylindrique agencée à l'intérieur du corps de guidage 14 et une seconde partie cylindrique de diamètre inférieur au diamètre de la première partie cylindrique. La seconde partie du poussoir 40 s'étend axialement au travers d'un passage 22 réalisé au niveau de la partie distale 18 du corps de pince 12. L'extrémité de cette seconde partie est logée à l'intérieur de l'évidement axial 63 du bloc cylindrique 62.

La seconde partie du poussoir 40 comporte par ailleurs un taraudage axial à l'intérieur duquel est vissée une vis de blocage 42 ainsi qu'une aiguille 46. Une des extrémités de l'aiguillée 46 est en butée contre la vis de blocage 42 afin d'assurer une position axiale précise de l'aiguille. La position axiale de la vis de blocage 42 peut être ajustée, par exemple par une clé inbus, afin de pouvoir ajuster la position axiale de l'aiguille.

L'autre des extrémités de l'aiguille se trouve en partie à l'intérieur de la partie distale 52 de la tête de serrage sur laquelle se situe l'insert 60, lorsque le poussoir se trouve dans la première position axiale selon la figure 6. Plus particulièrement, la position de la pointe de l'aiguille coïncide, d'une part, avec la fin du dégagement *L1* et, d'autre part, avec une première extrémité axiale de l'insert 60. Dans cette configuration, l'insert 60 possède un diamètre permettant d'ajuster une partie complémentaire d'une pièce à usiner sur l'insert.

Une fois que la pièce à usiner est positionnée, la douille coulissante de la machine-outil est déplacée axialement afin de venir au contact du cône de poussée 30 afin de déplacer celui-ci jusqu'à qu'il vienne en butée contre une collerette 29 agencée sur le pourtour du corps de pince 12 au niveau de sa partie distale 18.

Le déplacement du cône de poussée 30 permet de déplacer le poussoir 40 dans la seconde position axiale illustrée à la figure 4. Dans cette configuration, l'aiguille traverse l'intégralité de la partie distale 52 de la tête de serrage 50, ce qui provoque le déplacement radial des secteurs angulaires 54a, 54b, 54c, 54d vers l'extérieur afin d'accroitre le diamètre de l'insert 60 de manière à garantir un serrage optimal de la pièce à usiner.

Comme évoqué plus en détail ci-après, la tête de serrage 50 est destinée à être usinée par l'utilisateur final afin de la personnaliser et de l'adapter aux caractéristiques des pièces à usiner. Les dimensions de la partie distale 52 de la tête de serrage 50 destinée à tenir la pièce peuvent par conséquent varier. Par exemple, la distance axiale de la partie distale 52 peut varier en fonction de la pièce à usiner.

L'ajustement de la position axiale de la vis de blocage 42 à l'avantage de permettre l'ajustement de la position axiale de l'aguille de sorte à ce que celle-ci traverse l'intégralité de la partie distale 52 de la tête de serrage 50 indépendamment de la longueur la partie distale.

En se référant aux figures 4 et 6, un organe élastique, de préférence un ressort de compression 48 est agencé dans une cavité cylindrique 23 autour de la seconde partie du poussoir 40 et en appui contre un épaulement 24. Ce ressort permet de ramener le poussoir dans la première position axiale illustrée à la figure 6 lorsque la douille coulissante de la machine-outil est dégagée du cône de poussée 30. Dans cette configuration, les secteurs angulaires 54a, 54b, 54c, 54d sont revenues dans leur position de repos, réduisant ainsi le diamètre extérieur de l'insert 60 afin de pouvoir retirer la pièce usinée.

Dans une forme de réalisation, l'aiguille 46 fait partie intégrante du corps de pince 12 comme illustré à la figure 7. Selon une variante non-illustrée, l'aiguille peut fait partie intégrante de la tête de serrage amovible.

Un des intérêts de la présente invention est de permettre à l'utilisateur d'usiner aisément la tête de serrage 50 afin de la personnaliser et de l'adapter à différents types de pièces à usiner. Dans ce cas, un utilisateur obtient tout d'abord un corps de pince 12 et au moins une tête de serrage amovible 50 pré-usinée, ou de préférence un assortiment de tête de serrage de différentes formes et/ou de différents matériaux. Il choisit ensuite dans cet assortiment de têtes variées une tête de serrage appropriée, par exemple celle dont la forme correspond le mieux à ses besoins, et dont le matériau correspond aux exigences de la pièce à usiner.

L'utilisateur peut ensuite personnaliser cette tête en l'usinant dans la forme personnalisée qui correspond à ses besoins. A cette fin, il suffit de fixer la tête de serrage dans le corps de pince et de monté la pince de serrage assemblée dans la machine-outil pour l'usinage de la tête dans sa forme définitive par l'utilisateur final.

### Liste de référence

Pince de serrage 10
Corps de pince 12
   Corps du guidage 14
   Partie proximale 16
   Partie distale 18
      Passage 22
      Cavité 23
      Epaulement 24
      Ouvertures 26
         Surface d'appui conique 27
      Logement 28
      Collerette 29
   Conne de poussée 30
      Languette de fixation 32
      Vis de fixation 34
   Poussoir 40
      Vis de blocage 42
      Aguille 46
   Organe élastique 48
Tête de serrage amovible 50
   Partie distale 52
      Segment angulaires 54a, 54b, 54c, 54d
      Fentes longitudinales 56a, 56b
      Passage centrale 58
      Insert 60
   Partie proximale 62
      Bloc
      Evidement axial 63
      Taraudage 64
      Vis de fixation 66
   Butée conique 68

## Revendications

1. Pince de serrage (10) pour pièce d'usinage adaptée pour coopérer avec une douille coulissante d'une machine-outil, comportant un corps de pince (12) et une tête de serrage amovible (50) montée sur le corps de pince (12) et comportant une partie distale (52) destinée à tenir une pièce au cours de l'usinage, le corps de pince (12) comportant un corps de guidage (14) définissant un axe longitudinal, un poussoir (40) monté coulissant à l'intérieur du corps de guidage (14) le long de l'axe longitudinal afin de passer d'une première position axiale dans laquelle la partie distale (52) de la tête de serrage (50) définit un premier diamètre extérieur autour duquel peut être montée une pièce à usiner, à une seconde position axiale, sous l'action de la douille coulissante, et dans laquelle ladite partie distale (52) définit un second diamètre extérieur supérieur au premier diamètre afin de serrer la pièce à usiner, le corps de pince (12) comportant une partie distale (18) comprenant un logement (28), la tête de serrage amovible (50) comportant une partie proximale (62) montée dans le logement (28), **caractérisée en ce que** la partie distale (18) du corps de pince (12) est rigide.

2. La pince de serrage (10) selon la revendication 1, **caractérisée en ce que** la tête de serrage amovible (50) est monobloc.

3. La pince de serrage (10) selon la revendication 1 ou 2, **caractérisée en ce que** la partie proximale (62) de la tête de serrage (50) est rigide.

4. La pince de serrage (10) selon l'une des revendications précédentes, **caractérisée** en ce la partie distale (52) de la tête de serrage (50) comporte un insert (60), de préférence en métal dur, destiné à tenir la pièce au cours de l'usinage.

5. La pince de serrage (10) selon la revendication précédente, **caractérisée en ce que** l'insert (60) est réalisé par brasure.

6. La pince de serrage (10) selon l'une des revendications précédentes, **caractérisée en ce que** le poussoir (40) comporte ou coopère avec une aiguille (46) s'étendant sur au moins 80% de la longueur axiale (L) de la partie distale (52) de la tête de serrage amovible (50) au travers d'un passage (58), de préférence sur l'intégralité de ladite longueur axiale (L), lorsque le poussoir (40) est dans la seconde position axiale.

7. La pince de serrage (10) selon la revendication précédente, **caractérisée en ce que** l'extrémité libre de l'aiguille (46) se trouve au niveau d'une extrémité axiale de la partie distale (52) de la tête de serrage (50) lorsque le poussoir (40) est dans la première position axiale.

8. La pince de serrage (10) selon la revendication 6 ou 7, **caractérisée** en que l'aiguille (46) fait partie intégrante de la tête de serrage amovible (50).

9. La pince de serrage (10) selon la revendication 6 ou 7, **caractérisée** en que l'aguille (46) fait partie intégrante du corps de pince (12).

10. La pince de serrage (10) selon l'une des revendications 6 à 9, **caractérisée en ce que** le poussoir (40) comporte un taraudage axial dans lequel est vissée une vis de blocage (42), une extrémité de l'aiguille (46) étant en butée contre la vis de blocage, ladite vis de blocage (42) pouvant être ajustée axialement afin de pouvoir ajuster la position axiale de l'aiguille (46).

11. La pince de serrage (10) selon l'une des revendications précédentes, **caractérisée en ce que** la partie proximale de la tête de serrage amovible (50) est sous la forme d'un bloc (62) comportant plusieurs taraudages (64), l'axe de chaque taraudage étant perpendiculaire à l'axe longitudinal du corps de guidage (14), le logement (28) de la partie distale (18) du corps de pince (12) étant entouré d'une paroi comportant plusieurs ouvertures radiales de sorte à pouvoir fixer la tête de serrage amovible (50) au moyen de vis de fixation (66) traversant les ouvertures radiales et vissées dans les taraudages respectifs (64).

12. La pince de serrage (10) selon la revendication précédente, **caractérisée en ce que** ledit logement (28) est entouré d'une surface d'appui conique (27), la tête de serrage amovible (50) comportant une butée conique (68) destinée à venir en butée contre la surface d'appui conique (27), lorsque le bloc (62) de la tête de serrage amovible (50) est monté dans ledit logement.

13. La pince de serrage (10) selon l'une des revendications précédentes, **caractérisée en ce que** le corps de pince (12) comporte en outre un cône de poussée (30) agencé sur l'intégralité de la circonférence du corps de guidage (14), le cône de poussée (30) étant solidaire du poussoir (40) et agencé pour coopérer avec la douille coulissante afin d'amener le poussoir de la première à la seconde position axiale.

14. Pince de serrage (10) selon l'une des revendications précédentes, **caractérisée en ce que** le poussoir (40) coopère avec un organe élastique (48) afin de ramener le poussoir dans la première position axiale.
